# EUROPEAN PATENT SPECIFICATION

(11) **EP 1 157 054 B1**
(45) Date of publication and mention of the grant of the patent: **12.02.2003**
(21) Application number: 99967116.7
(22) Date of filing: 19.11.1999
(51) Int. Cl.: C08G 18/38, C09D 175/04, C09D 201/06

(54) **POWDER SLURRY COMPOSITION CONTAINING PARTICULATE CARBAMATE FUNCTIONAL COMPOUNDS**
PULVER-SLURRY-ZUSAMMENSETZUNG, DIE TEILCHENFÖRMIGE CARBAMAT-FUNKTIONELLE VERBINDUNGEN ENTHÄLT
COMPOSITION DE SUSPENSION PULVERULENTE CONTENANT DES COMPOSES PARTICULAIRES FONCTIONNEL CARBAMATE

(30) Priority: 14.12.1998 US 211577
(43) Date of publication of application: 28.11.2001
(73) Proprietor: Basf Corporation, Southfield, MI 48034-2442 (US)
(72) Inventor: OHRBOM, Walter, Hartland Township, MI 48353 (US); REHFUSS, John, Huntersville, NC 28078 (US); MCGEE, John, Avon, IN 46123 (US); GESSNER, Michael, West Bloomfield, MI 48322 (US)
(74) Representative: Fitzner, Uwe, Dr.
(86) International application number: US9927518
(87) International publication number: WO00053653

(56) References cited:
- EP-A- 0 516 066
- EP-A- 0 661 315
- EP-A- 0 767 187

## Description

### Field of the Invention

The present invention relates to powder slurry compositions containing particulate, solid carbamate functional compounds. The invention provides a powder slurry composition comprising a particulate component (a) dispersed in a liquid component (b).

### Background of the Invention

Powder slurry compositions have been used to provide a variety of advantages in the coating of articles. Powder slurry compositions typically include a first component that is in solid particulate form and a second component that is liquid. The first component is dispersed in the second component to provide a slurry which can be applied using conventional spray application equipment and techniques.

Aqueous powder slurry compositions provide the advantages of powder coating compositions with the ease of application of traditional solvent borne coatings. As a result, powder slurry compositions have the potential for environmental and/or financial advantages.

However, powder slurry compositions may present manufacturing, performance and/or application challenges.

Traditional powder slurry compositions often utilize epoxy acid compound systems. Such systems can sacrifice scratch and mar resistance in order to obtain acceptable water resistance, chip resistance and etch resistance.

The nature of the powder coating composition used in the powder slurry composition requires the use of initial temperatures above the T_{g} of the powder resin, followed by temperatures sufficient to affect crosslinking. Thus, high cure schedules are often required. It will be appreciated that application concerns and energy costs encourage the use of powder slurry compositions having lower Tg resins. The use of lower Tg resins facilitates more rapid flow, improved appearance and lower cure temperatures.

However, storage and manufacturing problems can result when powder slurry compositions having lower T_{g} resins are utilized. Manufacturing is particularly challenging, especially with acid epoxy compound systems. Separation, precipitation and/or agglomeration of the solid particulate component during storage may also be observed.

Inferior film adhesion and/or cracking of the applied powder slurry film during curing are sometimes observed, particularly when the powder slurry is applied over a previously applied coating. These negative performance characteristics can be magnified by higher film builds and storage stability.

Finally, finished films obtained from powder slurry compositions can exhibit variable gloss and/or inferior performance characteristics, particularly when balancing scratch and mar resistance against water resistance, chip resistance and etch resistance. It is often difficult to achieve an acceptable balance of properties among these characteristics, especially with traditional acid epoxy powder/powder slurry compound systems.

Thus, it is desirable to provide improved powder slurry compositions wherein the foregoing disadvantages are either eliminated or are minimized. Prior art attempts hereto have been unsuccessful.

It is expected that the use of one or more particulate carbamate functional resins will provide powder slurry compositions having an advantageous balance of properties.

EP 0 661 315 A1 discloses a process for a curable composition comprising (a) reacting a trifunctional isocyanurate with a compound selected from the group consisting of water, monohydric alcohols, diols and diamines, (b) reacting the isocyanurate of (a) to form a carbamate substituted component. This document does not describe that the polyisocyanate used to form the carbamate substituted compounds has a T_{G}>= 30°C and is of the formula [R(NCO)y]x, wherein R has Cₙ symmetry and n is 2 or higher.

### Summary of the Invention

The invention provides a powder slurry composition having a particulate component (a) dispersed in a liquid component (b). Component (a) comprises a solid or particulate compound (i) comprising the reaction product of a polyisocyanate (A) and a compound (B). Polyisocyanate (A) is of the formula [R(NCO)_{y}]ₓ, where x = 1or higher, y = 2 or higher, and R has *C*_{*n*} symmetry when n = 2 or higher. Compound (B) comprises both an isocyanate-reactive group and a functional group selected from the group consisting of a carbamate group and groups convertible to a carbamate group after reaction of compound (B) with polyisocyanate (A). One or both of component (a) and component (b) will comprise at least one crosslinking compound (ii).

### Detailed Description of the Invention

The powder slurry composition of the invention requires two components, a first component (a) in solid or particulate form that is dispersed in a liquid component (b).

First component (a) comprises a particulate compound (i) comprising the reaction product of a polyisocyanate (A) and a compound (B). Polyisocyanate (A) has a T_{g} ≤ 30°C and is of the formula [R(NCO)_{y}]ₓ, where x = 1 or higher, y = 2 or higher, and R has *C*_{*n*} symmetry when *n* = 2 or higher.

The compound (i) of the invention is particularly suitable for use in powder slurry coating compositions. While not wishing to be bound to a particular theory, the particular advantages of compound (i) are believed to be due in part to polyisocyanate (A).

Polyisocyanate (A) is of the formula [R(NCO)_{y}]ₓ, where x = 1 or higher, y = 2 or higher, and R has C_{*n*} symmetry wherein *n* = 2 or higher. Thus, isocyanate (A) is monomeric when x = 1, a uretedione or polyisocyanate dimer if x = 2, an isocyanaurate when x = 3, or a polymeric homopolymer if x is greater than 3. x may be 1 or higher but is preferably 1, 2, or 3, more preferably x = 1 or 3, and most preferably, x = 3. y may be 2 or higher but is preferably, 2, 3, or 4 and is most preferably 2.

As indicated above, R must have a particular symmetry in order to provide a polyisocyanate (A) suitable for use in the instant invention. As used herein, a molecule with symmetry means that certain parts of the molecule can be interchanged, via a symmetry operation, with others without altering either the identity or the orientation of the molecule..

Symmetry operations are geometrically defined ways of exchanging equivalent parts of a molecule. However, such operations are symmetry operations if, and only if, the appearance of the molecule is exactly the same relative to the pre- and post- symmetry operation view. Thus, the term "symmetrical" as used herein refers to a molecular having an appearance that appears identical relative to the pre- and post- symmetry operation views. Put another way, "[a] molecule possesses a symemetry element if the application of the operation generated by the element leaves the molecule in an indistinguishable state." *Molecular Symmetry and Group Theory*, Alan Vincent, Wiley & Sons, NY, 1977, reprinted 1981, page 21.

The instant application is concerned only with proper rotation symmetry operations. Proper rotation, also referred to as "*C*_{*n*}", refers to simple rotation about an axis passing through the molecule by an angle *2π*/*n* or an angle 360°/*n*. A molecule is said to have a *C*_{*n*} symmetry element if after undergoing a proper rotation *C*_{*n*} operation, it's appearance is indistinguishable from it's appearance prior to undergoing the proper rotation *C*_{*n*} operation, irrespective of conformational isomers. Put another way, a molecule possesses a symmetry element, in this case *C*_{*n*}, when one or more of its conformational isomers possesses that symmetry element. The highest symmetry element that belongs to any conformational isomer of the molecule is assigned to the molecule.

While it may be appreciated that all molecules have *C*_{*n*} symmetry where n is 1, the instant application is only concerned with R groups also having *C*_{*n*} symmetry where n is 2 or higher.

For example, the two most common conformational isomers of cyclohexane 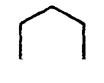 are the chair: 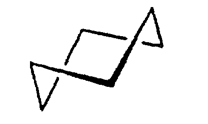 which has a C₃ proper rotation axis, and the boat conformation: 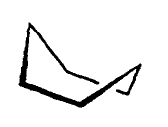 which has a C₂ proper rotation axis. As a result, cyclohexane may be defined as having a molecular C₃ proper rotation axis (*C*_{*n*} wherein *n=3)* without having to define its conformation.

Similarly, hexane, with the freedom of motion around its numerous single bounds can exist in a large number of configurations such as the one below: 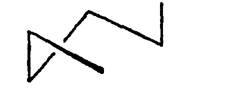 One of the conformational isomers of hexane (shown below) possess a C₂ proper rotation axis. Therefor, hexane may be said to possess a *C*_{*2*} (wherein *n* = 2) molecular symmetry element.

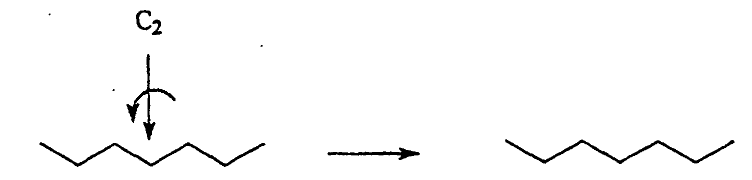

R is an alkyl or cycloalkyl group having at least four carbons and a particular symmetry as herein described. Preferably, R will be an alkyl group having from four to 12 carbons and most preferably R will be an alkyl group having from four to 8 carbons. R will preferably be an alkyl group of the formula CₙH₂ₙ. Examples of illustrative R groups include C₄H₈ and C₆H₁₂. A particularly preferred group is C₆H₁₂.
Preferably R has a molecular weight between 50 and 165. Illustrative examples of suitable R groups include alkyl groups such as: 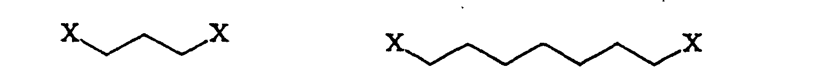 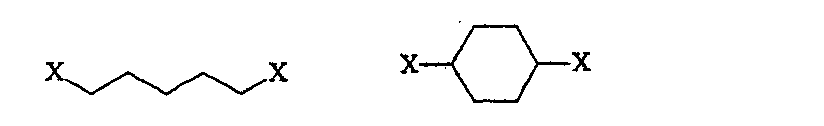 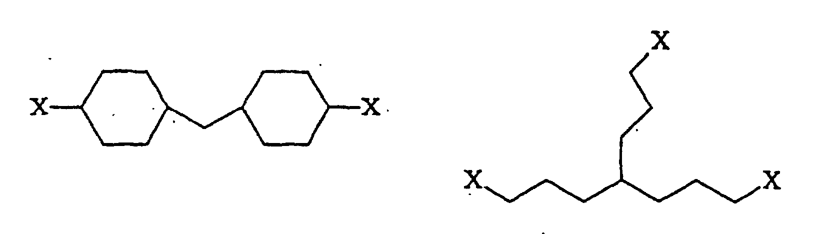 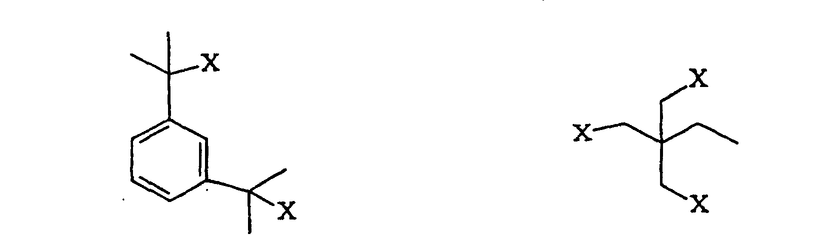 where "X" marks the location of an isocyanate group.
Preferably the polyisocyanate (A) is a monomeric diisocyanate.

. Examples of polyisocyanates suitable for use as polyisocyanate (A) include 1,6-hexane diisocyanate, *m*-tetramethyl xylene diisocyanate, dicyclohexylmethane-4,4'-diisocyanate, 1, 4-butane diisocyanate, 1-isocyanato-2,2'(bisisocyanatomethyl)propane, 1,7-diisocyanato-4-(3-isocyanatopropyl)heptane, the respective dimers thereof, the respective trimers thereof, and mixtures thereof. Preferred polyisocyanates (A) are 1-isocyanato-2,2'(bisisocyanatomethyl)propane, 1,6-hexane diisocyanate, *m*-tetramethyl xylene diisocyanate and the respective dimers thereof, the respective trimers thereof, and mixtures thereof. Most preferred as polyisocyanate (A) is 1,6-hexane diisocyananate, the respective dimers thereof, the respective trimers thereof.

Compound (B) is a compound containing an isocyanate-reactive group and either a carbamate group or a group convertible or capable of converting to a carbamate group after reaction of compound (B) with polyisocyanate (A) is completed. Compound (B) is preferably a compound containing an isocyanate-reactive group and a carbamate group.

Compounds containing an isocyanate-reactive group and a carbamate group are preferably hydroxyalkyl carbamates such as hydroxypropyl carbamate or hydroxybutyl carbamate, or aminoalkyl carbamate groups such as aminoethyl carbamate, aminopropyl carbamate and the like.

Compounds containing an isocyanate-reactive group and a group convertible or capable of converting to a carbamate group after reaction of compound (B) with polyisocyanate (A) is completed, include hydroxy-containing cyclic carbonate compounds convertible to carbamate by reaction with ammonia (e.g., the reaction product of glycidol and CO₂), monoglycidyl ethers (e.g., glycidyl propyl ether convertible to carbamate by reaction with CO₂ and then ammonia), allyl alcohols where the alcohol group is reactive with NCO and the double bond can be converted to carbamate by reaction with peroxide, and vinyl esters where the ester group is reactive with NCO and the vinyl group can be converted to carbamate with reaction with peroxide, then CO₂, and then ammonia.

Also suitable as compound (B) are compounds having a carbamate group as well as a group that can be converted into a carbamate. The carbamate group can then react with the isocyanate group to form an allophanate. The carbamate-convertible group can then be converted into a carbamate. An example of such a compound is allyl carbamate.

Preferably, compound (B) will be a hydroxyalkyl carbamate compound having an alkyl group of from 2 to 6 carbons, especially from 2 to 4 carbons. Most preferably, (B) will be hydroxylpmpyl carbamate.

The compound (i) of the invention will preferably have a molecular weight of from 350 to 1900 and most preferably from 460 to 900. The equivalent weight per carbamate functional group can range from 175 to 450 and preferably from 175 to 350.

Compound (i) will typically have no acid or hydroxy groups.

Compound (i) is normally a solid at 25°C, the term "solid" referring to a substance of definite shape and relatively great density, low internal enthalpy, and great cohesion of its molecules. *Grant & Hackh's Chemical Dictionary, Fifth Edition McGraw-Hill, Inc*. *pg.541*. Compound (i) will typically have a T_{g} ≥ 30°C.

The compound (i) of the invention will typically be processed in one or more solid masses, for example sheets, rolls, or drops, by accepted powder compound manufacturing techniques. After solidifying, the mass is broken into particles having a desired size and shape. The size and shape of the compound particles is dependent upon handling, processing, and equipment considerations.

Preferably, the compound (i) will be in the shape of flat chips or discs having regular or irregular dimensions. Particles having an average particle size of from 2,54 to 7,62 cm (1 to 3 inches) are preferred, with average particle sizes of from 1 micron to up to 2,54 cm (1 inch) most preferred. Particle size as used herein refers to the average diameter of an object having irregular boundaries that can be determined with known test methods.

It will be appreciated that particulate component (a) is preferably a powder coating comprising compound (i).

Prior to dispersion in liquid component (b), component (a) should have an average particle size of from 0.1 to 100 microns. A preferred average particle size range for component (a) at this time, is from 3 to 60 micron. A 30 to 45 micron average particle size is most preferred. Traditional extrusion and grinding processes may be used to obtain particulate component (a) within these ranges.

Compound (i) may initially have an average particle size within or outside this range resulting from known powder compound manufacturing techniques.

Solid particulate first component (a) upon admixture with liquid component (b) will typically be subsequently treated so as to reduce the above particle sizes to those more desirable for a powder slurry composition. Once in combination with component (b), the powder slurry composition may be subjected to a particle size reduction treatment such as wet milling, microfiuidization, cavitation, or other high sheer, low temperature techniques known to those skilled in the art. Thus the particle size of the powder slurry composition of the invention after a particle size reduction treatment is typically from 0.1 to 20 microns, more preferably from 0.1 to 15 microns and most preferably, will have an average particle size of from 0.1 to 12 microns.

Component (a) may be obtained according to conventional techniques and methods. The compositions of the invention are advantageous because compound (i) permits the use of higher processing temperatures. Moreover, during the preparation of solid particulate component (a), or subsequent thereto, pigments, pigment dispersions, modifiers, dispersion aids, regulators, flow modifiers, fillers, and/or additives may optionally be added as desired.

Liquid component (b) may be one or more liquids or solvents suitable for the dispersment of particulate compound (a). Examples of suitable liquids or solvents include water, water soluble solvents, and organic solvents and mixtures thereof. Illustrative water-soluble solvents are alcohols. Examples of illustrative water soluble solvents and/or organic solvents are ethyleneglycol monomethylether, ethyleneglycol monoethylether, ethyleneglycol monobutylether, methanol, ethanol, isopropanol, n-butanol, sec-butanol, tert-butanol, dimethylformamide, etc. Preferred liquids for use in are water, alcohols and mixtures thereof. A most preferred liquid component (b) is water. Such solvents will typically be used in quantities of from 0 to 10, based on total weight of the powder slurry, and preferably from 0 to 1.0%.

The weight proportion of component (a) and component (b) is usually from 90:10 to 50:50, preferably from 75:25 to 60:40, in terms of solid component.

The powder slurry composition of the invention may further comprise additional optional components such as one or more solvents or additives such as pigments, fillers, catalysts, corrosion inhibitors, modifers, dispersants, flow additives, and mixtures thereof. These materials may be incorporated into component (a), component (b) or the mixture thereof.
The powder slurry coating composition of the invention may further comprise one or more members selected from the group consisting of thickening agents, surfactants, dispersents, and mixtures thereof.

For the preparation of the powder slurry composition of the invention, the required and optional components may be combined in an optional order and mixed well by conventional processes. Component (b) may be mixed with component (a) and a pigment and, if necessary, further with other optional components. Alternatively, pigment may be mixed with component (b) to form a pigment paste, which is then admixed with a mixture of component (a) and component (b). A grinding or milling operation may follow such admixture. A preferred method of manufacture is disclosed in U.S Patent 5,379,947.

The powder slurry composition of the invention has advantageously low VOCs as a result of the unexpected benefits of the components of the invention.

The powder slurry composition of the invention can be applied by spray or by electrostatic deposition and are useful as both basecoat and topcoat applications. It is expected that the resultant coating compositions form smooth films with advantageous performance properties.

One or both of component (a) and component (b) will comprise a crosslinking agent (ii) reactive with particulate compound (i).

Crosslinking agent (ii) may be in liquid or solid form at the time of incorporation into component (a), component (b) or the mixture thereof. The use of crosslinking agent (ii) in liquid form and incorporated into liquid component (b) is most preferred.

Illustrative examples of crosslinking agent (ii) include one or more compounds having a plurality of functional groups that are reactive with compound (a). Suitable reactive groups include active methylol or methylalkoxy groups on aminoplast crosslinking agents or on other compounds such as phenol/formaldehyde adducts, acrylamide groups, isocyanate groups, siloxane groups, cyclic carbonate groups, and anhydride groups.

Examples of the at least one crosslinking compound (ii) include melamine formaldehyde compound (including monomeric or polymeric melamine compound and partially or fully alkylated melamine resin), urea resins (e.g., methylol ureas such as urea formaldehyde resin, alkoxy ureas such as butylated urea formaldehyde resin), polymers having acrylamide groups, polymers having methylol or alkoxymethyl groups, polyanhydrides (e.g., polysuccinic anhydride), and polysiloxanes (e.g., trimethoxy siloxane). Monomeric and/or low oligomeric aminoplast resins such as melamine formaldehyde resins or urea formaldehyde resins are especially preferred.

The ratio of equivalents of compound (a) to equivalents of crosslinking agent (ii) is about from 0.5:1.0 (a:b) to 1.5:1.0, preferably from about 0.8:1.0 to 1.2:1.0.

The powder slurry compositions of the invention can be applied by spray or by electrostatic deposition and are useful as both basecoat and topcoat applications. It is expected that the resultant coating compositions form films having an acceptable appearance with advantageous performance properties.

The powder slurry compositions of the invention may be applied to a variety of substrates for use in various end use applications such as automotive, furniture, industrial, lawn and garden, appliances, electrical equipment, and the like.

Suitable substrates include metal, plastic, wood, ceramics, composites and mixtures thereof. Metal and/or plastic substrates are preferred. Substrates will preferably be clean prior to application of the powder coating. Substrates may be optionally pretreated with phosphating, chromatizing and similar pretreatment methods to improve adhesion and/or appearance. It will be appreciated that pretreatment selection is dependent upon the desired substrate and end use application.

After application, the coated part is subjected to a cure schedule sufficient to effect flow and cure. As used herein, "cure schedule" refers to the time/temperature relationship required to effect complete curing of a thermosetting powder coating. Typical cure schedules for the powder coatings of the invention involve part temperatures of from 121 to 205°C (250-400°F) and time at part temperature of from 10 to 30 minutes. Preferred cure schedules are from 121 to 205°C (250-400°F) and time at part temperature of from 10 to 20 minutes.

The inventions are further described in the following nonlimiting examples.

### Example 1

### Preparation of compound according to the invention.

A mixture of 139.9 parts of hydroxy propyl carbamate, 98.8 parts of 1,6-hexanediisocyanate (HDI), 10.5 parts of toluene and 0.8 parts of tin octoate were mixed and heated until an exothermic reaction occurred. The maximum temperature for the reaction mixture was kept below 100° C. 28.5 parts of butyl acetate was added to the resulting solid resin. The mixture was heated until the system was liquid (132°C). When cooled to room temperature, approximately 25°C, a solid compound was obtained.

### Example 2

### Prophetic preparation of a powder slurry composition according to the invention.

Three hundred grams of the compound made in example #1 is ground in an ACM mill to an average particle size of 25- 35 microns and set aside. One gram of Abex EP-110¹, is added to 100 grams of Cymel 303² and mixed for 5 minutes with a standard mixing blade. A stainless steel vessel with a cowles mixing blade is loaded with 200 grams of water. Keeping the speed low the following items are added in order: 5 grams of Disperse AYD W-22,³ 0.1 grams of Triton X100⁴, 2.5 grams of propylene glycol, and 3 grams of Acrysol RM-8W⁵. The mixer speed is increased to 4 - 500 rpm for 5 minutes prior to the addition of 132.5 grams of the ground resin. The vessel is allowed to mix for 10 minutes. Next 43 grams of the Cymel 303 premixed above is added followed by 7 grams of Nacure 5225⁶ and 110 grams of water. The vessel is mixed for 10 minutes after which the cowles blade is replaced by a media disk mixing blade. Enough small (1.1 - 1.4 mm) ceramic media is added to the vessel to equal 50% of the volume of the mixture. The temperature of the mixture is maintained at 18 - 23°C, and is stirred at 1200 rpm. The particle size is monitored over time to attain a final median particle size of 4-5 microns. The disk is removed and the media filtered out using a 55 micron nylon filter. The viscosity is adjusted to 35 - 45" #4 Ford cup with water. The slurry is sprayed out of a standard siphon spraygun over a heat flashed but not cured waterborne base coat, allowed to flash 5 minutes at room temperature and then baked from 20-30 minutes at 132°C (270°F).
¹ a surfactant, commercially available from Rhodia.
² a hexamethoxymethyl melamine, commercially available from Cytec.
³ a dispersant, commercially available from Daniel Products.
⁴ a nonionic surfactant, commercially available from Union Carbide.
⁵ a thickening agent, commercially available from Rhom & Haas.
⁶ a sulfonic acid catalyst, commercially available from King Industries.

## Claims

1. A powder slurry coating composition comprising
(a) a particulate component comprising
(i) a particulate compound comprising the reaction product of a polyisocyanate (A) and a compound (B),
dispersed in
(b) a liquid component, wherein
compound (B) comprises an isocyanate-reactive group and a functional group selected from the group consisting of a carbamate group and groups convertible to a carbamate group after reaction of compound (B) with polyisocyanate (A) and
polyisocyanate (A) has a T_{g} ≥ 30°C and is of the formula [R(NCO)_{y}]ₓ, where x = 1 or higher, y = 2 or higher, and R has *C*_{*n*} symmetry wherein *n* = 2 or higher .

2. The powder slurry coating composition of claim 1 wherein R has a molecular weight between 50 and 165.

3. The powder slurry coating composition of claim 1 wherein x is 1, 2, or 3 and y is 2 or 3.

4. The powder slurry coating composition of claim 1 wherein *n* is 2.

5. The powder slurry coating composition of claim 1 wherein the polyisocyanate (A) is a monomeric diisocyanate.

6. The powder slurry coating composition of claim 1 wherein the polyisocyanate (A) is an isocyanurate.

7. The powder slurry coating composition of claim 1 wherein the polyisocyanate (A) is selected from the group consisting of 1,6-hexane diisocyanate, *m*-tetramethyl xylene diisocyanate, dicyclohexylmethane-4,4'-diisocyanate, 1,4-butane diisocyanate, 1-isocyanato-2,2'(bisisocyanatomethyl)propane, the respective dimers thereof, the respective trimers thereof, and mixtures thereof.

8. The powder slurry coating composition of claim 1 wherein compound (B) is a hydroxyalkyl carbamate.

9. The powder slurry coating composition of claim 8 wherein compound (B) is hydroxy propyl carbamate.

10. The powder slurry coating composition of claim 1 wherein one or both of component (a) and component (b) comprise at least one crosslinking agent (ii) which is reactive with particulate compound (i).

11. The powder slurry coating composition of claim 1 wherein crosslinking agent (ii) is one or more aminoplast resins.

12. The powder slurry coating composition of claim 1 further comprising one or more members selected from the group consisting of thickening agents, surfactants, dispersents, and mixtures thereof.

## Patentansprüche

1. Pulverslurry-Lackzusammensetzung, enthaltend
(a) eine teilchenförmige Komponente, enthaltend
(i) eine teilchenförmige Verbindung, bei der es sich um das Umsetzungsprodukt aus einem Polyisocyanat (A) und einer Verbindung (B) handelt,
dispergiert in
(b) einer flüssigen Komponente,
**dadurch gekennzeichnet, daß** die Verbindung (B) eine gegenüber Isocyanat reaktive Gruppe und eine aus der Gruppe bestehend aus einer Carbamatgruppe und nach Umsetzung der Verbindung (B) mit dem Polyisocyanat (A) in eine Carbamatgruppe überführbaren Gruppen ausgewählte funktionelle Gruppe enthält und
das Polyisocyanat (A) eine T_{g}≥30°C hat und der Formel [R(NCO)_{y}]ₓ, worin x = 1 oder mehr, y = 2 oder mehr und R C_{*n*}-Symmetrie mit *n* = 2 oder mehr aufweist, entspricht.

2. Pulverslurry-Lackzusammensetzung nach Anspruch 1, bei der R ein Molekulargewicht zwischen 50 und 165 aufweist.

3. Pulverslurry-Lackzusammensetzung nach Anspruch 1, bei der x gleich 1, 2 oder 3 und y gleich 2 oder 3 ist.

4. Pulverslurry-Lackzusammensetzung nach Anspruch 1, bei der *n* gleich 2 ist.

5. Pulverslurry-Lackzusammensetzung nach Anspruch 1, bei der es sich bei dem Polyisocyanat (A) um ein monomeres Diisocyanat handelt.

6. Pulverslurry-Lackzusammensetzung nach Anspruch 1, bei der es sich bei dem Polyisocyanat (A) um ein Isocyanurat handelt.

7. Pulverslurry-Lackzusammensetzung nach Anspruch 1, bei der das Polyisocyanat (A) aus der Gruppe bestehend aus 1,6-Hexandiisocyanat, *m*-Tetramethylxyloldiisocyanat, Dicyclohexylmethan-4,4'-diisocyanat, 1,4-Butandiisocyanat, 1-Isocyanato-2,2'bis(isocyanatomethyl)propan, den jeweiligen Dimeren davon, den jeweiligen Trimeren davon und Gemischen davon ausgewählt ist.

8. Pulverslurry-Lackzusammensetzung nach Anspruch 1, bei der es sich bei der Verbindung (B) um ein Hydroxyalkylcarbamat handelt.

9. Pulverslurry-Lackzusammensetzung nach Anspruch 8, bei der es sich bei der Verbindung (B) um Hydroxypropylcarbamat handelt.

10. Pulverslurry-Lackzusammensetzung nach Anspruch 1, bei der Komponente (a) und/oder Komponente (b) mindestens einen gegenüber der teilchenförmigen Verbindung (i) reaktiven Vernetzer (ii) enthalten.

11. Pulverslurry-Lackzusammensetzung nach Anspruch 1, bei der es sich bei dem Vernetzer (ii) um ein oder mehrere Aminoplastharze handelt.

12. Pulverslurry-Lackzusammensetzung nach Anspruch 1, ferner enthaltend ein oder mehrere Mitglieder der Gruppe bestehend aus Verdickern, Tensiden, Dispergiermitteln und Gemischen davon.

## Revendications

1. Composition de revêtement de poudre en suspension comprenant
(a) un composant particulaire comprenant
(i) un composé particulaire comprenant le produit de réaction d'un polyisocyanate (A) et d'un composé (B),
dispersé dans
(b) un composant liquide, dans laquelle
le composé (B) comprend un groupe réactif avec un isocyanate et un groupe fonctionnel choisi dans l'ensemble constitué par un groupe carbamate et des groupes transformables en groupe carbamate après réaction du composé (B) avec le polyisocyanate (A), et
le polyisocyanate (A) a une Tᵥ ≥ 30°C et répond à la formule [R(NCO)_{y}]ₓ, dans laquelle x = 1 ou plus, y = 2 ou plus et R présente une symétrie Cₙ lorsque n = 2 ou plus.

2. Composition de revêtement de poudre en suspension selon la revendication 1, dans laquelle R a une masse moléculaire comprise entre 50 et 165.

3. Composition de revêtement de poudre en suspension selon la revendication 1, dans laquelle x vaut 1, 2 ou 3 et y vaut 2 ou 3.

4. Composition de revêtement de poudre en suspension selon la revendication 1, dans laquelle n vaut 2.

5. Composition de revêtement de poudre en suspension selon la revendication 1, dans laquelle le polyisocyanate (A) est un diisocyanate monomère.

6. Composition de revêtement de poudre en suspension selon la revendication 1, dans laquelle le polyisocyanate (A) est un isocyanurate.

7. Composition de revêtement de poudre en suspension selon la revendication 1, dans laquelle le polyisocyanate (A) est choisi dans le groupe constitué par le 1,6-hexane diisocyanate, le m-tétraméthylxylène diisocyanate, le dicyclohexylméthane-4,4'-diisocyanate, le 1,4-butane diisocyanate, le 1-isocyanato-2,2'-(bis-isocyanatométhyl)propane, leurs dimères respectifs, leurs trimères respectifs, et leurs mélanges.

8. Composition de revêtement de poudre en suspension selon la revendication 1, dans laquelle le composé (B) est un carbamate d'hydroxyalkyle.

9. Composition de revêtement de poudre en suspension selon la revendication 8, dans laquelle le composé (B) est le carbamate d'hydroxypropyle.

10. Composition de revêtement de poudre en suspension selon la revendication 1, dans laquelle le composant (a) ou le composant (b), ou les deux, comprennent au moins un agent de réticulation (ii) qui est réactif avec le composé particulaire (i).

11. Composition de revêtement de poudre en suspension selon la revendication 1, dans laquelle l'agent de réticulation (ii) est une ou plusieurs résines aminoplastes.

12. Composition de revêtement de poudre en suspension selon la revendication 1 comprenant, en outre, un ou plusieurs éléments choisis dans le groupe constitué par les agents épaississants, les tensioactifs, les dispersants et leurs mélanges.
